# EUROPEAN PATENT APPLICATION

(11) **EP 1 225 784 A2**
(43) Date of publication of application: **24.07.2002**
(21) Application number: 01310593.7
(22) Date of filing: 19.12.2001
(51) Int. Cl.: H04Q 11/00

(54) **Wavelength routing in a photonic network**

(30) Priority: 22.12.2000 US 747697
(71) Applicant: Nortel Networks Limited, St. Laurent, Quebec H4S 2A9 (CA)
(72) Inventor: Lu, Xiang, Hertfordshire CM23 5TB (GB); Briggs, Alan, Cambridgeshire CB2 4NT (GB); Warbrick, Kevin, Hertfordshire CM23 1DT (GB)
(74) Representative: Ryan, John Peter William

(57) **Abstract**

In a WDM optical communications network, each node (18) has an optical switching arrangement (20) and a bank of converters (40), each converter (40) being capable of carrying out optical to electric conversion and electric to optical conversion for an individual WDM channel. The optical switching arrangement (20) is controllable to route selected channels to a converter (40) for regeneration or wavelength translation based on performance measurement. This enables the location at which regeneration takes place to be selected as a function of the actual signal degradation along the network. This enables margins to be reduced, so that the location of regeneration for a particular channel is optimum.

## Description

### Field of the Invention

This invention relates to optical networks with signal regeneration along the signal path. The invention particularly is concerned with the optimisation of the regeneration of the optical signal, using optical signal quality analysis.

### Background of the Invention

Optical signals suffer degradation between the transmitter and receiver from such factors as noise, inter-symbol interference, fiber dispersion, non-linearity of the elements and transmission medium. In addition, in amplified wavelength division multiplexed (WDM) systems, the transmission characteristics vary from one channel to another due to the non-flat gain and noise profile of erbium-doped fiber amplifiers (EDFAs).

Distortion is defined as any inaccurate replication of a signal transmitted over a communication link, and could originate in any network element along the link. It can be measured by assessing the difference between the wave shape of the original signal and that of the signal at the network element of interest, after it has traversed the transmission link.

In the last decade, transmission rates of data signals have increased progressively, which has led to more complex and less tolerant transmission systems. For transmission at high rates, such as 40 or 80 Gb/s, the distortion of the optical link is a critical parameter. However, determining the cause of a distortion in the received signal is no longer a simple operation, especially in optical transmission systems with in-line optical amplifiers. System performance degradation caused by noise and optical path distortions are also usually difficult to separate, making the performance evaluation complicated.

In the evaluation of the characteristics of an optical fiber communication system, the bit error ratio (BER) has usually been used as a parameter for performance evaluation. BER is defined as the ratio between the number of erroneously received bits to the total number of bits received over a period of time (for example a second). A number of codes have been provided in the signal at transmitter for error detection, the basic idea being to add redundant bits to the input data stream over a known number of bits. The BER calculated by the receiver includes information on all impairments suffered by the signal between the transmitter and receiver, i.e. both noise and distortion together.

Performance of an optical system is also defined by a parameter called Q. The Q value (or Q-factor) indicates the 'useful signal'-to-noise ratio of the electric signal regenerated by the optical receiver, and is defined as follows:$\text{Q} \text{=} \frac{{\text{µ}}_{\text{1}} {\text{- µ}}_{\text{0}}}{{\text{σ}}_{\text{1}} {\text{+ σ}}_{\text{2}}}$ where µ₁ is the mean value of the '1's, µ₀ is the mean value of the '0's, σ₁ is the standard deviation of the level of '1's, and σ₀ is the standard deviation of the level of '0's. These parameters can be understood from looking at the so-called eye diagram, which represents the received signal, time-shifted by integer multiples of the bit period, and overlaid. The eye diagram can be produced on an oscilloscope by applying a baseband signal to the vertical input of the oscilloscope and triggering the instrument time base at the symbol rate. For a binary signal, such an eye diagram has a single 'eye', which is open or closed to an extent determined by the signal degradation. An open pattern is desired, as this provides the greatest distance between signals representing a 1 and those representing a 0. Changes in the eye size indicate inter-symbol interference, amplitude irregularities, or timing problems, such as jitter, depending on the signal that is measured. The value of Q can be used directly to derive the bit error ratio, and various techniques are available for monitoring the Q value.

The level of distortion dictates the length of span over which the signal can travel before requiring regeneration. In conventional optical communication networks, the regenerators for a given link between nodes of the network are spaced at a distance which allows worst case signal degradation to be "corrected" by the regeneration operation. This worst case scenario assumes the worst noise level, the worst eye closure, and the worst dispersion to be expected within the system. These are, of course, only examples of the factors to be taken into consideration. The evolution of these parameters over time is also taken into consideration, so that the system configuration takes account of performance variations over time, such as degradation of the laser diodes of the transmitters.

The assumption of worst case signal degradation means that there are significant operating margins. In other words, regenerators are likely to be more closely spaced than is required in practice. Furthermore, these margins may be different at system set up (so-called "Day 0 margins") and at the end of the expected life of the system (so-called "End of life margins").

In conventional networks, performance monitoring is used principally for locating the source of errors, so that appropriate switching (protection switching) and maintenance can be carried out. Therefore, conventional networks operate inefficiently as a result of the margins discussed above, which prevent optimum usage of regenerators within the network. As a result, the reach or capacity of the system is limited.

### Summary of the invention

According to a first aspect of the invention, there is provided a WDM optical communications network comprising a plurality of nodes, each node being provided with an optical switching arrangement and a bank of converters, each converter being capable of carrying out optical to electric conversion and electric to optical conversion for an individual WDM channel, an optical performance measurement circuit being associated with the bank of converters enabling performance measurement of the channel associated with each converter, wherein the optical switching arrangement is controllable to route selected channels to a converter for regeneration or wavelength translation, and wherein the routing of selected channels is in dependence on the performance measurement information.

This network architecture enables the location at which regeneration takes place to be selected as a function of the actual signal degradation along the network. This enables the margins to be reduced, so that the location of regeneration for a particular channel is optimum, namely the minimum number of regeneration operations is carried out. In turn, this enables the network to have less regenerators or else enables the reach or capacity to be increased for given hardware.

The bank of converters, to which signals are switched when regeneration or wavelength translation is required, can be expanded in response to changing requirements of the network.

Each converter preferably comprises a receiver and a transmitter. The receiver of each converter preferably comprises a broadband receiver and the transmitter of each converter preferably comprises a tuneable transmitter. This enables any channel to be switched through the converter for regeneration. The number of converters at each node will thus be selected on the basis of statistical analysis of the expected traffic flow through the network.

Preferably, an optical performance measurement circuit is provided for each converter, which may comprise a Q measurement circuit.

According to a second aspect of the invention, there is provided a method of configuring a WDM optical communications network comprising a plurality of nodes, each node being provided with an optical switching arrangement and a bank of converters, each converter being capable of carrying out optical to electric conversion and electric to optical conversion for an individual WDM channel, an optical performance measurement circuit being associated with the bank of converters enabling performance measurement of the channel associated with each converter, the method comprising:
sending a test signal from a source node to a destination node;
measuring the optical signal quality at intermediate nodes in the path between the source node and the destination node;
from the signal quality measurements, determining the node or nodes between the source and destination nodes where regeneration is required; and
configuring the optical switching arrangements of the nodes such that at the nodes where regeneration is required, the signal is passed through a converter for regeneration.

This method uses a test signal to determine where regeneration is required for a particular channel between a destination and source node.

The optical signal quality is preferably measured using measurement circuitry which includes a converter. This means that the quality measurement uses the same components as are used for the regeneration, so that no margin is required to compensate for differences in the loss introduced by the circuitry used for measuring the quality and the circuitry used for regeneration.

The configuration of the optical switching arrangements can be adjustable over time, to enable the regenerator configuration to be altered. This means that the initial configuration does not need to compensate for expected degradation of components over time, but this can be compensated for dynamically.

The method of configuring the network is preferably implemented by a network control center, and the invention also provides a computer program for carrying out the method.

According to a third aspect of the invention, there is provided a method of designing a WDM optical communications network comprising a plurality of nodes, the method comprising:
providing each node with an optical switching arrangement and a bank of converters, each converter being capable of carrying out optical to electric conversion and electric to optical conversion for an individual WDM channel,
associating an optical performance measurement with the bank of converters enabling performance measurement of the channel associated with each converter,
wherein the number of converters in each node is selected as a function of the expected traffic statistics through the network.

### Brief description of the drawings

Examples of the invention will now be described in detail with reference to the accompanying drawings, in which:
Figure 1 shows a network structure which can benefit from the architecture of the invention;
Figure 2 shows a simplified node structure for implementing the network architecture of the invention;
Figure 3 shows a quality measuring circuit for use in the nodes of the invention;
Figure 4 shows schematically the network control architecture; and
Figure 5 shows the network architecture in more detail for a preferred implementation of the invention.

### Detailed description

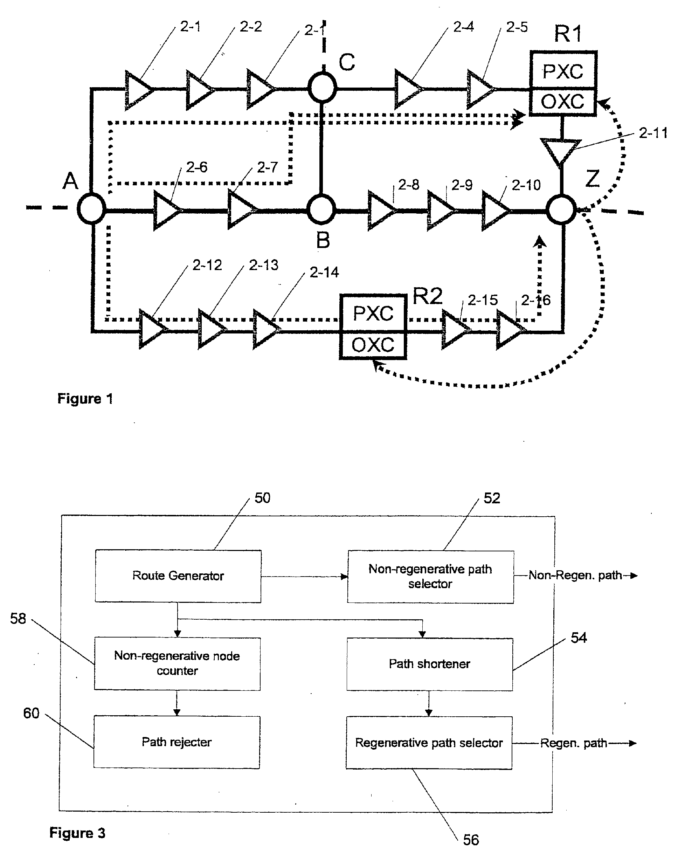

Figure 1 shows a WDM optical communications network comprising a plurality of interconnected nodes 18, each node comprising an optical switching arrangement 20 for performing routing of signals across the network. The nodes are connected together by optical fibers 22 along which optical amplifiers 24 are placed. The fibers 22 carry WDM optical signals, and each node comprises a multiplexing/demultiplexing units 26 which provide the channels of the WDM system on individual fibers to the switching arrangement 20. The switching arrangement may switch individual channels, bands of channels, all channels or the entire fiber signal.

The arrows 30 indicate one possible connection through the network enabling equipment 32 at a source node 18a to communicate with equipment 34 at a destination node 18b. The equipment 32, 34 is any device which provides optical signals for transmission over the network or which is provided for receiving signals from the network.

Each node 18 can perform a regeneration function for the signals passing through the node. This involves conversion of the signal from the optical domain to the electrical domain, with subsequent conversion back into the optical domain. In conventional networks, the locations at which a signal is regenerated are determined using rules before installing the network, and the spacing between regeneration sites will be selected taking account of the worst case signal degradations along the signal path. Thus, for a particular path between a source and destination node the sites at which regeneration takes place will be determined at system configuration. Regeneration will not necessarily occur at each node.

The regeneration function is typically carried out by transponders, which perform not only receiving and transmitting functions, but also enable wavelength translations to be carried out. This enables different sections of the path to use different carrier frequencies, which may be required by the network management system, which allocates bandwidth to the communication paths.

Although Figure 1 only shows the source and destination nodes as providing signals to, or taking signals from the network, each node of the network may also have add/drop capability.

The equipment 34 may include some error detection capability. However, this will not indicate the location of the source of the signal degradation, which will normally result from a component failure or deterioration within one of the elements along the route 30. It is known to carry out optical spectrum analysis (OSA) at each amplifier 24 which can be used-to detect amplifier failures and can also be used to control protection switching. However, such analysis does not enable all types of fault to be detected. For example, high levels of cross talk within a cross connect will result in eye closure, causing an increase in the BER. Although this may not result in a failure at that location, with further attenuation before the signal reaches the destination, there may be sufficient performance loss to cause unacceptable errors. An OSA will not detect this degradation, and failure indications at the destination node will not enable the fault to be located. An OSA also will not detect other eye closure faults, dispersion and non-linear effects.

Therefore, it has been recognised that Q measurement at the nodes can provide an indication of where a step change in the optical signal eye occurs, so that the cause can be isolated.

The invention is based on the recognition that signal analysis along the path may also be used to determine the required spacing for regeneration of the optical signal. In a preferred embodiment, this optical signal measurement is carried out using Q measurement.

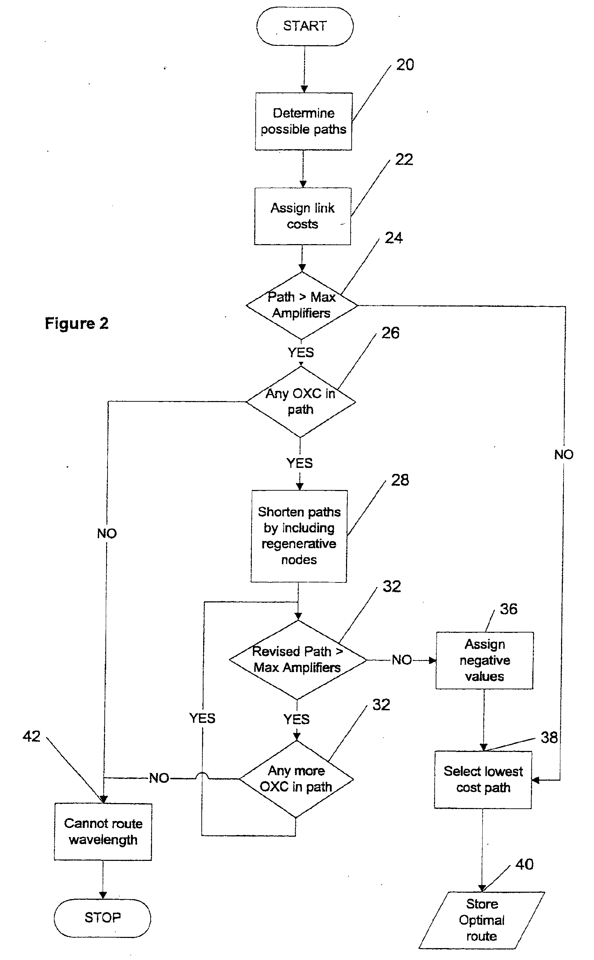

Figure 2 shows in greater detail a node 18 of the invention, which may be used to build up a network architecture, such as that shown in Figure 1. Each node comprises the optical switching arrangement 20 and a bank of converters 40 in the form of transponders. These transponders comprise a receiver 42 and a transmitter 44, so that there is optical to electric conversion and electric to optical conversion for each channel 46. Each converter 40 also comprises circuitry for performing Q measurement, or else a single circuit for measuring Q is provided which can be allocated selectively to a desired converter 40.

The switching arrangement 20 may switch individual channels, in which case the (de-) multiplexing units 26 derive the individual channels from the fiber 50. However, the optical switching arrangement 20 may instead be provided for switching bands of channels, which reduces the required number of ports of the switching device 20. The signal quality measurement is, however, carried out on an individual channel basis, and in this case a further (de-) multiplexing unit 52 is provided, as shown in Figure 2, for deriving the individual channels 46 from the bands of channels 54. Figure 2 also shows a preamplifier 56 and a post-amplifier 58.

The node of the invention enables a reconfigurable network to be provided. The network architecture has the flexibility to switch regenerators (converters 40) into a path.

When a communication path is to be initiated, such as path 30 shown in Figure 1, an initial call set up procedure is initiated. This may involve sending a pseudo-random sequence along the selected path 30. At each node 18 along the path 30, the signal quality is measured, in particular by measuring the optical Q value. This involves routing the signal through a converter 40, and carrying out Q measurement before returning the signal (path 47 in Figure 2) to the optical switching arrangement 20, which switches it back onto the path 30. In order to determine the locations at which regeneration is required, the Q value may be monitored at each node in turn (with the other nodes acting in pass through mode), and the first node for which the Q value measurement gives rise to an unacceptable error ratio is then determined. Regeneration is then deemed to be necessary at the preceding node within the path 30. Once it has been determined at which node or nodes regeneration is required, the optical switching arrangements 20 are configured appropriately so that during traffic flow, the signals are diverted through the converters 40 only at those nodes where regeneration is required. The other nodes act in pass through, so that the path 30 does not use the converters 40 of those nodes.

An alternative approach is to simply determine a Q value which is considered unsatisfactory, and to regenerate at the node where this Q value is first reached. The Q value selected may take into account the expected degradation of the system due to ageing. In this case, the dynamic configuration allows the "day 0 margins" to be eliminated, but maintains a margin to allow the system configuration to be maintained until the expected end of life.

It is also possible to eliminate the "day 0 margins" and the "end of life margins", and this will of course require performance monitoring during the life of the network, so that dynamic adjustments may be made. These adjustments will involve altering the configuration of the optical switching arrangements, so that the regenerator configuration is altered.

When the optical switching arrangements 20 have been configured to provide the path 30, with regeneration at the required nodes, signal quality measurement can then only take place at the nodes where regeneration is to take place. During the operation of the network, the signal quality is continuously monitored at the regeneration sites, and if signal quality degrades below a predetermined threshold, the optical switching arrangements 20 can be reconfigured so that a node nearer the transmitter is reconfigured to act as a regeneration site. This enables the network to reconfigure to compensate for degradation of components over time, but still requires monitoring only at the regeneration sites. This enables the Day 0 and End of life margins to be eliminated.

The network arrangement of the invention enables less transponders to be used, as they are allocated more efficiently. Each node 18 will be provided with a bank of transponders, with a number of transponders being significantly lower than the number of channels. The ratio of the number of transponders required to the number of channels will be determined as a function of the expected traffic statistics through the network. The use of broadband receivers and tuneable transmitters within each converter 40 enables the converters 40 to be shared between channels, which enables the allocation of converters on this statistical basis. This statistical analysis will also determine the proportion of channels which will require an add/drop capability, as well as the proportion of channels which will require wavelength transponders.

The measurement of Q value uses the receiver of the transponder, so that there is no mismatch between the performance of the receiver used for regeneration and the performance of the receiver used for quality measurement. This avoids the need to factor an additional margin to reflect lack of correlation between these components, which would otherwise be required.

Figure 3 shows the Q measurement circuitry which could be used by the converters 40. The receiver 42 of the converter 40 supplies the signal to a clock extraction circuit 62, which clocks the remaining components of the Q measurement circuitry. The clock extraction circuit 62 can provide adaptive clock recovery, so that the error measurement is bit rate independent. The pseudo error ratio is obtained by comparing the measured signal from one decision circuit D1 (essentially a comparator) which uses a fixed decision threshold V_{FIXED} (the normal operating point for the decision threshold of the channel) with the measured signal from another decision circuit D2 which uses a variable decision threshold V_{VARIABLE}.

The variable decision threshold scans various values, in known manner. The further the decision threshold is from the centre of the eye, the higher the pseudo error ratio that is measured.

The two measured signals are supplied to an XOR element 66 which provides an output pulse when the inputs are different. Each output pulse represents a pseudo error, which assumes the normal operating point V_{FIXED} provides an error free signal, so that all differences to this are errors. The pulse rate is measured to obtain the BER (bit error ratio) for different decision threshold voltage These BER values can be used to determine the Q value, essentially by a process of extrapolation, and this process will be well known to those skilled in the art. High pseudo error ratio counts are of course less accurate than low pseudo error ratio counts if the pseudo errors cross the normal decision threshold. However, in this case, there are still many more pseudo errors from the comparator with the offset threshold than the comparator with the normal threshold allowing the estimation of Q to remain reasonably accurate.

The output of the fixed threshold decision circuit provides the normal receiver output 68, which is then used to drive the transmitter 44 of the converter 40, either at the same or a different optical frequency (depending on whether frequency translation is required).

One particular circuit for measuring the pseudo error ratio has been shown, and which has the advantage of being protocol independent and which can also be data rate independent. However, other techniques for measuring the error ratio can be employed, such as by using a data structure embedded in the channel data. This may be BIP8 data built into the signal being measured. Thus, the quality measurement does not necessarily involve Q measurement.

As described above, the configuration of the network of the invention is established during a call set up procedure. Furthermore, the configuration can be adjusted dynamically by carrying out a similar set up procedure at predetermined intervals after the call has been set up. Each of these procedures is implemented by a network control center which communicates with the nodes of the network in order to obtain the signal quality information. The "intelligence" required to determine the desired network configuration based on the signal quality measurements can be distributed between the nodes, located centrally at the network control center, or else an individual node can be provided with the required processing capability.

Figure 4 shows schematically the network control architecture. A network control center 70 performs general network control functions, such as fault monitoring and access security management. Instructions from the control centre 70 are implemented by lower level control architecture 72, which carries out the functions of bandwidth management, wavelength and route management (for example using OSPF and MPLS type protocols) and other network management operations. This lower level control architecture 72 communicates directly with the nodes 74, for example to enable the optical switching instructions to be relayed to the nodes. The lower level control architecture 72 can be implemented as software located at the site of the control center 70 or it can be distributed between the nodes.

Figure 5 shows a network structure in which the intelligence (namely the processing capability) is distributed between the nodes. The control center 70 communicates with the nodes 74 through an IP network 76 (although the OSI protocol may instead be used). Packets may be communicated between the nodes 74 using the main fibers between the nodes 78 using the Optical Service Channel. Alternatively, an overhead in the structure of the data being transmitted may be used, for example overhead in the SONET frame structure.

In order to implement the distributed control, each node comprises a processor implementing software for distributed bandwidth management 80 and for distributed wavelength and routing management 82. The local processors at the nodes may comprise part of the node architecture or they may comprise separate external processors. Each node also includes an interface module 84 for communicating with the IP network 76.

The data communicated between the nodes will include the signal quality information obtained when the set up procedure of the invention is implemented, and the software at the nodes then enables the method of the invention, by which the desired network configuration is determined, to be implemented.

Instead of using the fibers between nodes, the communication of data between the nodes 74 and to the center 70 may be carried out using a separate network. The bandwidth of the data required to be transmitted for implementing the control of the invention is low and evolves slowly, so that low bandwidth communication channels can be used.

The invention also relates to the software for implementing the configuration control, and which may reside at the nodes and/or centrally at the network control center.

Various modifications will be apparent to those skilled in the art.

## Claims

1. A WDM optical communications network comprising a plurality of nodes, each node being provided with an optical switching arrangement and a bank of converters, each converter being capable of carrying out optical to electric conversion and electric to optical conversion for an individual WDM channel, an optical performance measurement circuit being associated with the bank of converters enabling performance measurement of the channel associated with each converter, wherein the optical switching arrangement is controllable to route selected channels to a converter for regeneration or wavelength translation, and wherein the routing of selected channels is in dependence on the performance measurement information.

2. A network according to claim 1, wherein each converter comprises a receiver and a transmitter, and the receiver of each converter comprises a broadband receiver.

3. A network according to claim 1, wherein each converter comprises a receiver and a transmitter, and the transmitter of each converter comprises a tuneable transmitter.

4. A network according to claim 1, wherein an optical performance measurement circuit is provided for each converter.

5. A network according to claim 4, wherein the optical performance measurement circuit comprises a Q measurement circuit.

6. A network according to claim 5, wherein the Q measurement circuit comprises a first decision circuit having a first, variable, decision threshold and a second decision circuit having a second, constant, decision threshold, and an XOR element which provides an output pulse when a different decision is made by the first and second decision threshold circuits,
wherein the output pulses are used to determine the pseudo error ratio for different first decision thresholds, and wherein the apparatus further comprises extrapolation means for obtaining a Q-value from the pseudo error ratio values.

7. A node for a WDM optical communications network, comprising an optical switching arrangement and a bank of converters, each converter being capable of carrying out optical to electric conversion and electric to optical conversion for an individual WDM channel, an optical performance measurement circuit being associated with the bank of converters enabling performance measurement of the channel associated with each converter, wherein the optical switching arrangement is controllable to route selected channels to a converter for regeneration, and wherein the routing of selected channels is in dependence on the performance measurement information.

8. A node according to claim 7, wherein each converter comprises a receiver and a transmitter, and the receiver of each converter comprises a broadband receiver.

9. A node according to claim 7, wherein each converter comprises a receiver and a transmitter, and the transmitter of each converter comprises a tuneable transmitter.

10. A node according to claim 7, wherein an optical performance measurement circuit is provided for each converter.

11. A node according to claim 7, wherein the optical performance measurement circuit comprises a Q measurement circuit.

12. A node according to claim 7, wherein the Q measurement circuit comprises a first decision circuit having a first, variable, decision threshold and a second decision circuit having a second, constant, decision threshold, and an XOR element which provides an output pulse when a different decision is made by the first and second decision threshold circuits, wherein the output pulses are used to determine the pseudo error ratio for different first decision thresholds, and wherein the apparatus further comprises extrapolation circuitry for obtaining a Q-value from the pseudo error ratio values.

13. A node according to claim 7, wherein the optical switching arrangement further provides add/drop functionality to the node.

14. A method of configuring a WDM optical communications network comprising a plurality of nodes, each node being provided with an optical switching arrangement and a bank of converters, each converter being capable of carrying out optical to electric conversion and electric to optical conversion for an individual WDM channel, an optical performance measurement circuit being associated with the bank of converters enabling performance measurement of the channel associated with each converter, the method comprising:
sending a test signal from a source node to a destination node;
measuring the optical signal quality at intermediate nodes in the path between the source node and the destination node;
from the signal quality measurements, determining the node or nodes between the source and destination nodes where regeneration is required; and
configuring the optical switching arrangements of the nodes such that at the nodes where regeneration is required, the signal is passed through a converter for regeneration.

15. A method according to claim 14, wherein the optical signal quality is measured using measurement circuitry which includes a converter.

16. A method according to claim 14, wherein the configuration of the optical switching arrangements is adjustable over time, to enable the regenerator configuration to be altered.

17. A method according to claim 14, wherein the optical signal quality measurement involves measurement of pseudo error ratios.

18. A method according to claim 14, wherein the optical signal quality measurement involves measurement of optical Q value.

19. A method of designing a WDM optical communications network comprising a plurality of nodes, the method comprising:
providing each node with an optical switching arrangement and a bank of converters, each converter being capable of carrying out optical to electric conversion and electric to optical conversion for an individual WDM channel,
associating an optical performance measurement with the bank of converters enabling performance measurement of the channel associated with each converter,
wherein the number of converters in each node is selected as a function of the expected traffic statistics through the network.

20. A computer storage medium containing computer executable instructions for performing a method of configuring a WDM optical communications, the network comprising a plurality of nodes, each node being provided with an optical switching arrangement and a bank of converters, each converter being capable of carrying out optical to electric conversion and electric to optical conversion for an individual WDM channel, an optical performance measurement circuit being associated with the bank of converters enabling performance measurement of the channel associated with each converter, the instructions performing a method comprising:
sending a test signal from a source node to a destination node;
measuring the optical signal quality at intermediate nodes in the path between the source node and the destination node;
from the signal quality measurements, determining the node or nodes between the source and destination nodes where regeneration is required; and
configuring the optical switching arrangements of the nodes such that at the nodes where regeneration is required, the signal is passed through a converter for regeneration.

21. A storage medium according to claim 20 which forms part of a network control unit.
